# EUROPÄISCHE PATENTANMELDUNG

(11) **EP 2 177 871 A2**
(43) Veröffentlichungstag der Anmeldung: **21.04.2010**
(21) Anmeldenummer: 09012494.2
(22) Anmeldetag: 02.10.2009
(51) Int. Cl.: G01B 11/24

(54) **Erfassungsanordnung für Mehrschichtenaufbauten**

(30) Priorität: 15.10.2008 DE 102008053600
(71) Anmelder: Bystronic Armatec GmbH, 91710 Gunzenhausen (DE)
(72) Erfinder: Bayer, Rudolf, 91722 Arberg (DE)
(74) Vertreter: Langöhrig, Angelika Beate

(57) **Zusammenfassung**

Anordnung zum berührungslosen Erkennen der Ausdehnung eines Objekts mit unterschiedlich reflektierenden Oberflächenbereichen durch Unterscheidung von einerseits spiegelnder und andererseits diffuser Reflexion von Lichtstrahlen, insbesondere zur Erfassung der äußeren Erstreckung einer äußeren Schicht eines Mehrschichtaufbaus (1) aus verschiedenen Materialien, mit einer punktförmigen Lichtquelle (21) und mindestens einem punktförmigen, lichtsensiblen Empfangsgerät (22), wobei mindestens eine optische Linse (32) oder Linsenanordnung vorgesehen ist, welche im Verhältnis zum Mehrschichtaufbau (1) und zur Lichtquelle (21) derart angeordnet ist, dass eine Lichtstrahlung der punktförmigen Lichtquelle (21) mittels der mindestens einen optischen Linse (32) unter Verwendung der spiegelnden Reflexion von dem zu erfassenden Mehrschichtaufbau (1) auf das mindestens eine punktförmige Empfangsgerät (22) abgebildet wird.

## Beschreibung

Die Erfindung betrifft eine Anordnung zum berührungslosen Erkennen der Ausdehnung bzw. der Begrenzung oder Erstreckung eines Objekts mit unterschiedlich reflektierenden Oberflächenbereichen durch Unterscheidung einerseits von spiegelnder und andererseits von diffuser Reflexion von Lichtstrahlen von dem zu untersuchenden Objekt nach dem Oberbegriff des Anspruchs 1.

Die Erfindung betrifft insbesondere eine Anordnung bzw. Vorrichtung zur Erfassung der Außenerstreckung oder Aussenkanten einer äußeren Schicht eines Mehrschichtaufbaus aus verschiedenen Materialien, wie beispielsweise Verbundglas, im Rahmen der Herstellung solcher Mehrschichtobjekte. Solche aus mehreren Schichten aufgebauten Objekte werden in Herstellungsprozessen heutzutage z.B. manuell oder maschinell besäumt ohne genaue Kenntnis von der Kantenlage bei einer maschinelle Besäumung zu haben. Wünschenswert wäre beim maschinellen Besäumen, die äußeren Begrenzung der Objekte bestimmen zu können, um das Heranführen der Scheidvorrichtung an den Mehrschichtaufbau zu verbessern. Durch das Besäumen werden etwaig überstehende Zwischenschichten des Mehrschichtaufbaus über die Schneidvorrichtungen abgetrennt, so dass die Begrenzungen aller Schichten übereinstimmen.

Dabei soll mit Ausdehnung, Erstreckung, Begrenzung etc. jeweils die Lage der Kanten bzw. die äussere Kontur gemeint sein, ohne dass es auf die tatsächlichen Abmessungen ankommt.

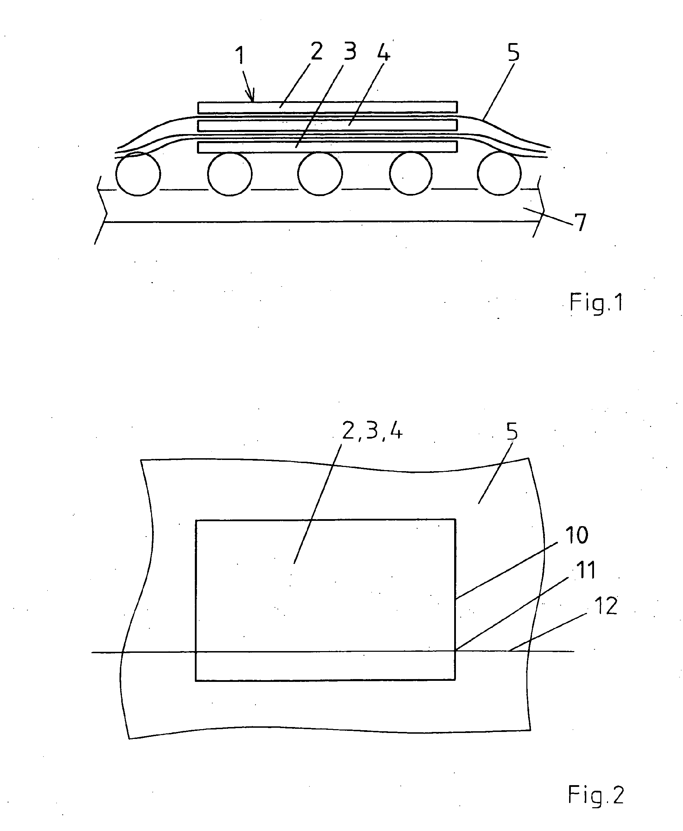

Derartige Mehrschichtaufbauten finden sich beispielsweise bei der Herstellung von Verbundsicherheitsglas mit mehreren Glasplatten und jeweils dazwischenliegenden flexiblen Zwischenschichten aus Kunststoffmaterial. Ein derartiger Anwendungsfall ist in einer schematischen Prinzipdarstellung in der Fig. 1 dargestellt. Der Mehrschichtaufbau 1 besteht hier aus zwei oder mehr aufeinandergelegten Glasplatten 2, 3, 4, wobei zwischen jeweils zwei Glasplatten eine oder mehrere Zwischenschichten 5 aus flexiblem Material eingefügt werden. Die flexiblen Zwischenschichten 5 ragen im Herstellungsprozess zunächst über die Glasplatten 2, 3, 4 hinaus, so dass sie mit einer Schneidvorrichtung an den Außenkanten der Glasplatten 2, 3, 4 bzw. des Schichtaufbaus 1 insgesamt beschnitten werden müssen. Hierfür ist eine genaue Erfassung der äußeren Erstreckung der äußeren Glasplatte 2 des Schichtaufbaus 1 erforderlich. Der gesamte Schichtaufbau 1 dieser Verbundglasplatte wird im Herstellungsprozess üblicherweise auf einem Bearbeitungstisch 7 befördert, beispielsweise in Form einer Rollenförderstrecke, wie es in der Fig. 1 schematisch dargestellt ist. Die Fig. 2 zeigt eine schematische Draufsicht der Anordnung nach der Fig. 1. Damit die Schneidprozesse bzw. die Besäumung des Mehrschichtaufbaus 1 zum Abtrennen von überstehenden Abschnitten der Zwischenschichten 5 korrekt ablaufen können, wird an der Position 11 der Außenkante 10 der Glasplatte 2, 3, 4 bezüglich einer Referenzlinie 12 ein Erfassungspunkt festgelegt, damit hier die notwendigen Bearbeitungsvorgänge an der richtigen Stelle ansetzen können. Um dies zu erreichen, sind im Stand der Technik verschiedene Methoden zur Erfassung der Ausdehnung bzw. der äußeren Erstreckung eines solchen Mehrschichtaufbaus vorgeschlagen worden.

Zum einen ist es im Stand der Technik bekannt, die Erfassung der Ausdehnung derartiger Mehrschichtobjekte durch ein tastendes Erkennen mittels eines berührenden Stößels mechanisch durchzuführen. Andererseits gibt es im Stand der Technik auch berührungslose Methoden, die beispielsweise mittels eines optischen Sensors von relativ begrenzter Reichweite arbeiten. Bei den mechanischen Methoden zur Erfassung der äußeren Erstreckung derartiger Objekte mittels eines auf das Objekt angelegten Stößels besteht ein Problem dahingehend, dass beim Erfassen der äußeren Erstreckung einer unteren Platte die Flexibilität der Zwischenschichten zu Störungen führen kann. Aufgrund der Flexibilität der Zwischenschicht kann es dadurch zu Fehlerkennungen durch die mechanische Erfassungsanordnung kommen. Beim Erfassen einer oberen Glasplatte eines Mehrschichtaufbaus muss die Abtasthöhe der Anordnung wegen der häufig unterschiedlichen Dicken der jeweiligen Mehrschichtaufbauten ständig angepasst werden, was einen entsprechenden maschinellen Aufwand hinsichtlich der Einstellung und Handhabung derartiger mechanischer Erfassungsanordnungen bedeutet.
Des Weiteren sind im Stand der Technik Methoden zur berührungslosen Erfassung derartiger Objekte mit mehreren Schichten bekannt, die sich einer optischen Erkennung der Objekte bedienen. Durch eine Auswertung von beispielsweise Farb- oder Helligkeitsunterschieden durch optische Sensoren oder beispielsweise durch eine Zeilenkamera und unter Zuhilfenahme von geeigneten Beleuchtungseinrichtungen werden hier die äußeren Erstreckungen der zu erfassenden Objekte berührungslos bestimmt. Die erforderlichen optischen Sensoriken und zusätzlichen Beleuchtungseinrichtungen bedeuten jedoch einen relativ hohen apparativen Aufwand. Außerdem ist mit diesen Methoden eine sichere Erkennung der äußeren Erstreckung von Platten eines Mehrschichtaufbaus häufig wegen der Transparenz von Glas trotzdem nicht gewährleistet. Für die weiterhin bekannte Lösung aus dem Stand der Technik einer linienförmigen Schrägbeleuchtung und anschließenden Bildauswertung über entsprechende Kamerasysteme gilt entsprechendes.

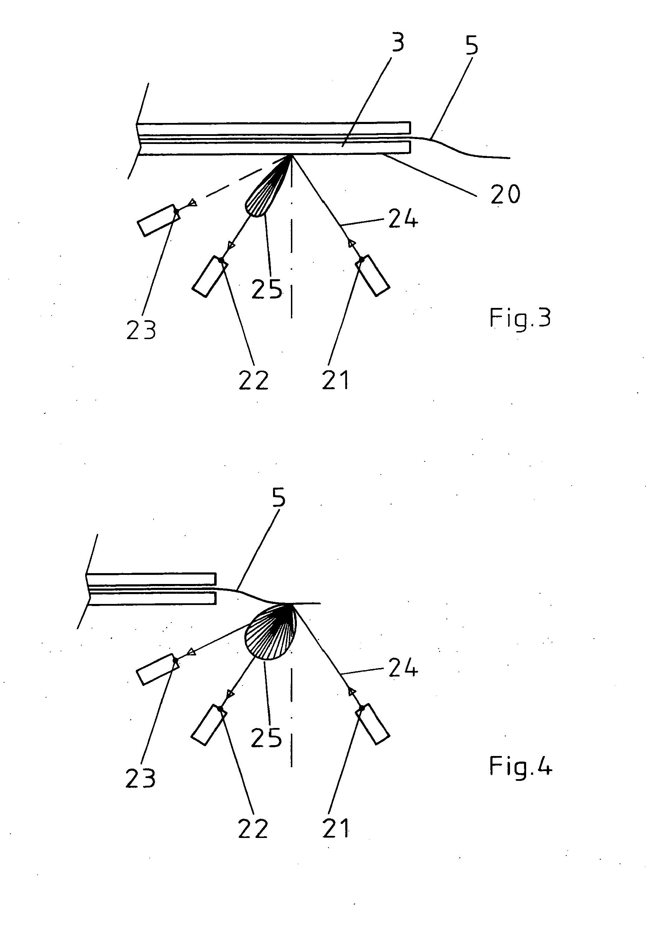

Ferner sind im Stand der Technik Verfahren und Vorrichtungen zur Erkennung der Ausdehnung von Mehrschichtobjekten bekannt, bei denen Unterschiede in den Reflexionseigenschaften der Oberflächenbereiche der verschiedenen Schichten der Objekte ausgenutzt werden. Unter Ausnutzung von Unterschieden zwischen einerseits einer spiegelnden Reflexion und andererseits einer demgegenüber mehr diffusen Reflexion können berührungslos die Grenzen und äußeren Erstreckungen von solchen Objekten erfasst werden. Das Prinzip dieser berührungslosen Erfassung von unterschiedlichen Reflexionsbereichen nach dem Stand der Technik ist in der Fig. 3 schematisch für die Unterseite eines aus zwei Glasplatten und einer Zwischenschicht 5 bestehenden Verbundglasaufbaus dargestellt. Eine punktförmige Lichtquelle 21 sendet einen entsprechend fokussierten Lichtstrahl 24 auf die untere Plattenoberfläche 20 beispielsweise einer Glasplatte. Das hier reflektierte Licht befindet sich in einer relativ eng begrenzten Keule 25, die in Richtung eines Empfangsgeräts 22 gesendet wird. Das lichtsensible Empfangsgerät 22 ist im Verhältnis zum zu erfassenden Objekt und zur Lichtquelle 21 derart ausgerichtet, dass der Lichtanteil einer spiegelnden Reflexion von dem Empfangsgerät 22 empfangen werden kann. Bei Empfang einer Keule 25 von reflektierten Lichtstrahlen wird im Empfangsgerät 22 ein Signal erzeugt, welches angibt, dass sich der Referenzpunkt bzw. die Referenzlinie für eine Schneidvorrichtung noch im Bereich einer Glasplatte befindet. Ein zweites lichtsensibles Empfangsgerät 23 ist linker Hand von dem ersten Empfangsgerät 22 angeordnet, welches bei dem in der Fig. 3 dargestellten Fall keine reflektierten Lichtstrahlen der Keule 25 empfängt und somit auch kein Signal erzeugt. Die Fig. 4 zeigt nun schematisch in einer Prinzipdarstellung für dieses Beispiel aus dem Stand der Technik die Situation bei einem diffus reflektierenden Objekt bzw. Oberflächenbeschaffenheit einer Schicht. Das durch die Lichtquelle 21 ausgestrahlte Licht wird an der flexiblen Zwischenschicht 5 diffus reflektiert, so dass eine wesentlich breitere Keule 25 gegenüber Fig. 3 aufgrund der diffusen Reflexion entsteht. Durch die breitere Keule 25 wird nun auch von dem zweiten Empfangsgerät 23 reflektiertes Licht empfangen und ein entsprechendes Signal in der Anordnung registriert. Wenn nun entsprechende Messsignale vorhanden sind, kann aus dem Verhältnis von reflektiertem Lichtanteil zu diffus gestreutem Lichtanteil auf eine spiegelnde Oberfläche oder eine nichtspiegelnde Oberfläche geschlossen werden. Der Übergang auf ein als gespiegelt erkanntes Signal kann als die Erkennung der Kante oder der äußeren Erstreckung einer äußeren Platte in einem Mehrschichtaufbau verwendet werden.

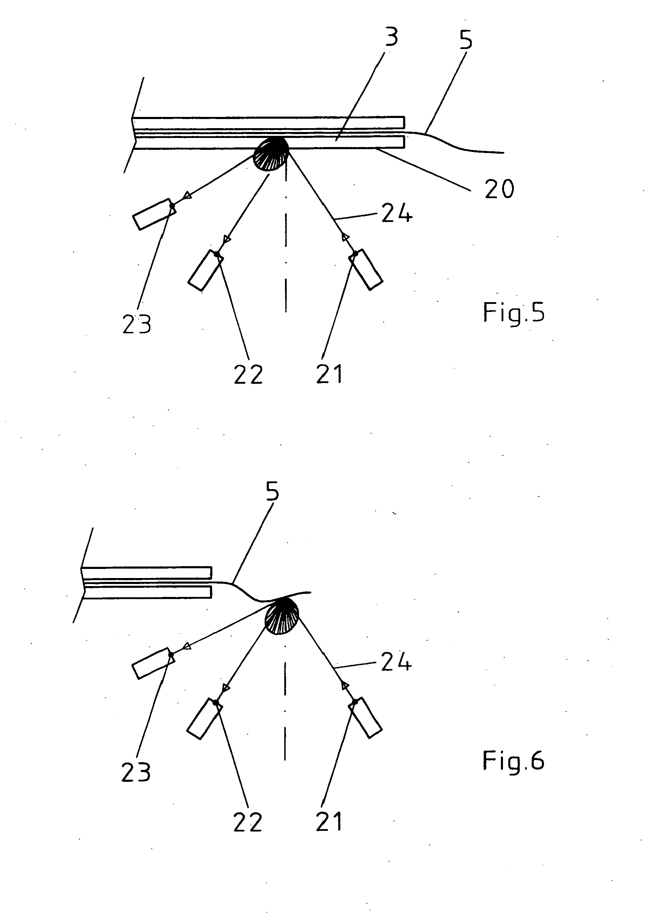

Diese aus dem Stand der Technik bekannte Anordnung zum berührungslosen Erfassen der Ausdehnung von Mehrschichtobjekten arbeitet jedoch nicht in jeder Situation betriebssicher, so dass es noch häufig zu Fehlerkennungen kommen kann. Die Empfangssignale bei den lichtsensiblen Empfangsgeräten, welche direkt von der Oberfläche des Objekts her kommen, könnten in ihrem Verhältnis zwar gut voneinander unterschieden werden. Andererseits durchdringt jedoch, wie in der Fig. 5 dargestellt, ein Teil der Strahlen aus der Lichtquelle 21 die vorderste Glasplatte 3 und wird erst an der ersten Zwischenschicht 5 diffus reflektiert. Der hier diffus reflektierte Lichtanteil erreicht auch das Empfangsgerät 23. Dadurch wird gegenüber der in der Fig. 3 dargestellten Situation das Verhältnis bzw. der Abstand der Empfangssignale in den Empfangsgeräten 22 und 23 verringert und die spiegelnd reflektierende Oberfläche möglicherweise nicht mehr erkannt.

Ein weiteres Problem dieser bekannten Erfassungsmethoden mittels Unterscheidung diffuser und spiegelnder Reflexion besteht darin, dass auch die diffuse Reflexion an der Zwischenschicht in der Regel richtungsabhängig ist. Dadurch kann eine ungünstige Lage und Positionierung der Lichtquelle einerseits und der Empfangsgeräte andererseits eine spiegelnde Oberfläche vortäuschen, wie dies in einer schematischen Prinzipdarstellung in der Fig. 6 dargestellt ist. Hier ist eine gewellte Lage einer überstehenden Zwischenschicht 5 dargestellt, wie sie aufgrund ihrer Flexibilität in der Praxis häufig vorkommen kann, die zu einem Verhältnis der Empfangssignale vom Empfangsgerät 22 zum Empfangsgerät 23 führt, das fälschlicherweise als eine spiegelnde Reflexion von der Erfassungsanordnung erkannt werden kann.

Demgegenüber ist es die Aufgabe der vorliegenden Erfindung, eine Anordnung zum berührungslosen Erkennen der Ausdehnung eines Objekts mit unterschiedlich reflektierenden Oberflächenbereichen bereitzustellen, welche eine sichere Erkennung der äußeren Erstreckung in jeder Situation und mit möglichst einfachen Mitteln ermöglicht.

Diese Aufgabe wird durch eine Anordnung mit den Merkmalen nach Anspruch 1 gelöst. Vorteilhafte Ausgestaltungen und Weiterbildungen der Erfindung sind Gegenstand der abhängigen Ansprüche.

Die Aufgabe wird durch eine Anordnung zum berührungslosen Erkennen der Ausdehnung eines Objekts mit den Merkmalen nach Anspruch 1 gelöst, wobei mindestens eine punktförmige Lichtquelle und mindestens ein punktförmiges, lichtsensibles Empfangsgerät vorgesehen sind und wobei mindestens eine optische Linse oder Linsenanordnung vorhanden ist, welche im Verhältnis zum Mehrschichtaufbau und zur Lichtquelle derart angeordnet ist, dass eine Lichtstrahlung der punktförmigen Lichtquelle mittels der mindestens einen optischen Linse unter Verwendung insbesondere der spiegelnden Reflexion von dem zu erfassenden Mehrschichtaufbau auf das mindestens eine punktförmige Empfangsgerät abgebildet wird. Im Unterschied zum Stand der Technik ist somit bei der erfindungsgemäßen Erfassungsanordnung eine optische Linse oder Linsenanordnung vorgesehen, mittels welcher der von der Lichtquelle ausgestrahlte Lichtstrahl genauer fokussiert werden kann, so dass die Erfassungsgenauigkeit zwischen einerseits spiegelnder Reflexion von Lichtstrahlen und andererseits diffuser Reflexion von Lichtstrahlen gegenüber den bisher bekannten Anordnungen deutlich erhöht ist. Die mindestens eine optische Linse oder Linsenanordnung nach der Erfindung kann dabei entweder im Strahlengang zwischen der Lichtquelle und dem zu untersuchenden Mehrschichtaufbau oder zwischen dem Mehrschichtaufbau und einem punktförmigen Erfassungsgerät angeordnet sein. Eine Kombination von beiden Anordnungsvarianten ist ebenfalls im Rahmen der Erfindung denkbar. Durch die Auswahl von geeigneten Linsen und deren Brennweiten sowie durch die gezielte Positionierung der Linsen in den Lichtstrahlkegeln kann erfindungsgemäß eine gezielte und genaue Fokussierung des ausgestrahlten und spiegelnd reflektierten Lichtstrahls durchgeführt werden, was insgesamt zu einer Erhöhung der Genauigkeit bei der Erfassung der äußeren Erstreckung der Mehrschichtaufbauten oder Objekte führt. Die Fehlerquote in der Erfassung von schwierigen Situationen ist außerdem gegenüber den bekannten Vorrichtungen reduziert.

Nach einer vorteilhaften Ausgestaltung der Erfindung ist eine Sammellinse zwischen der Oberfläche des zu erfassenden Mehrschichtaufbaus bzw. Objekts und dem punktförmigen, lichtsensiblen Empfangsgerät angeordnet. Durch die Sammellinse wird der von der Lichtquelle ausgestrahlte und am Objekt spiegelnd reflektierte Lichtstrahl, welcher in Richtung zu dem Empfangsgerät hin ähnlich einem Kegel breiter wird, wieder auf einen relativ begrenzten Punkt an der Stelle des Empfangsgeräts fokussiert. Dadurch wird die Abbildung des spiegelnd reflektierten Lichtstrahls verbessert bzw. es trifft die gesamte reflektierte Lichtmenge innerhalb des Lichtkegels auf den Empfangsteil am Empfangsgerät, wodurch eine wesentlich größere Menge an Lichtstrahlen dort eintrifft. Die Unterscheidung zwischen diffuser Reflexion und spiegelnder Reflexion durch die Anordnung wird dadurch besser und kann auch in Grenzbereichsituationen, in welchen herkömmliche Erfassungsvorrichtungen nicht mehr funktionieren, ein zuverlässiges Messergebnis liefern.

Nach einer weiteren vorteilhaften Ausgestaltung der erfindungsgemäßen Anordnung ist eine zusätzliche Sammellinse derart vorgesehen, dass ein von der Lichtquelle ausgestrahlter Lichtkegel zwischen der Lichtquelle und der Oberfläche des Mehrschichtaufbaus mittels der zusätzlichen Sammellinse zu einem mindestens näherungsweise parallelen Lichtbündel umgeformt wird. Zu diesem Zweck können nach der Erfindung beispielsweise die Brennweiten der beteiligten Linsen derart abgestimmt werden, dass die Lichtstrahlung von der Lichtquelle möglichst genau auf das mindestens eine Empfangsgerät abgebildet wird unter Berücksichtigung der spiegelnden Reflexion. Das parallele Lichtbündel hat ferner den Vorteil, dass die Erfassungsgenauigkeit unabhängig von der Entfernung vom Messobjekt bzw. vom Mehrschichtaufbau im Wesentlichen gleich bleibt. Wenn im Zusammenhang der vorliegenden Erfindung von Linsen oder Sammellinsen die Rede ist, sind darunter sowohl Einzellinsen als auch Kombinationen von mehreren Linsen zu verstehen.

Nach einer weiteren vorteilhaften Ausgestaltung der erfindungsgemäßen Anordnung sind/ist die Lichtquelle und/oder das punktförmige, lichtsensible Empfangsgerät derart angeordnet oder ausgebildet, dass sich ein von der Lichtquelle ausgestrahltes Lichtbündel und ein von dem Empfangsgerät empfangenes Lichtbündel erst ab einer gewissen Mindestentfernung von dem Mehrschichtaufbau bzw. Objekt überlappen. Dies hat den Vorteil, dass die Störung von diffus reflektierten Lichtstrahlanteilen weitestgehend ausgeschlossen wird. Da mit zunehmendem Abstand von dem zu erfassenden Mehrschichtaufbau der diffus reflektierte Anteil von Lichtstrahlen überproportional zurückgeht, kann ab einem Mindestabstand vom Messobjekt eine deutlich bessere Unterscheidung zwischen einerseits diffuser Reflexion und andererseits spiegelnder Reflexion vorgenommen werden. Die mit der Anordnung generierten Signale zum Erkennen der äußeren Erstreckung und von Referenzpositionen sind damit aussagekräftiger als bisher.

Nach einer weiteren vorteilhaften Ausgestaltung der erfindungsgemäßen Anordnung ist die mindestens eine Linse für die Umformung des von der Lichtquelle ausgestrahlten Lichtkegels zu einem parallelen Lichtbündel mit der Linse in Strahlungsrichtung der Lichtstrahlen vor dem mindestens einen Empfangsgerät identisch. Durch Verwendung von ein und derselben Linse in beiden Lichtbündeln bzw. Lichtkegeln wird der apparative Zusatzaufwand zur Realisierung der Erfindung reduziert. Nur eine einzige Linse bzw. Linsenanordnung ist für die Realisierung nach dieser Variante erforderlich.

Nach einer weiteren vorteilhaften Ausgestaltung der erfindungsgemäßen Anordnung ist ein mechanischer Trennsteg vorgesehen, welcher so im Verhältnis zu dem Empfangsgerät und/oder der Lichtquelle angeordnet ist, dass er ein Empfangssignal für eine spiegelnde Reflexion vom zu erfassenden Mehrschichtaufbau in dem Empfangsgerät zur Bestimmung einer Außenkante des Objekts erst ab einer gewissen Mindestentfernung des mindestens einen Empfangsgeräts vom Mehrschichtaufbau ermöglicht. Der mechanische Trennsteg bzw. die mechanische Trenneinrichtung kann zum Beispiel in Form einer Blende realisiert sein, welche eine Trennung von ausgestrahltem Lichtstrahl und reflektiertem Lichtkegel ermöglicht. Dadurch wird erst ab einer gewissen Mindestentfernung die Erzeugung eines Empfangssignals auf Grundlage von einer Unterscheidung zwischen diffuser Reflexion und spiegelnder Reflexion im Empfangsgerät ermöglicht. Diese Ausführungsvariante der Erfindung hat ferner den Vorteil, dass sie relativ unempfindlich gegenüber Änderungen im Abstand der Anordnung von den Messobjekten bzw. Mehrschichtaufbauten ist. Mögliche Störeinflüsse aufgrund eines zu großen Anteils von diffuser Strahlung werden ebenfalls verringert oder gar ganz vermieden.

Weitere Vorteile und Merkmale der Erfindung ergeben sich aus den übrigen Anmeldungsunterlagen. Die Erfindung wird nun im Folgenden anhand mehrerer Ausführungsbeispiele mehr im Detail und unter Bezugnahme auf die beigefügten Zeichnungen erläutert. In den Zeichnungen zeigen:
- Fig. 1: eine schematische Seitenansicht eines Mehrschichtaufbaus aus drei Glasplatten mit seitlich überstehenden und abzuschneidenden Zwischenschichten;
- Fig. 2: eine schematische Draufsicht des Mehrschichtaufbaus aus der Fig. 1;
- Fig. 3: eine schematische Seitenansicht einer Anordnung zum berührungslosen Erfassen von Objekten nach dem Stand der Technik bei reflektierender Spiegelung;
- Fig. 4: eine schematische Seitenansicht einer Anordnung zum berührungslosen Erfassen von Objekten nach dem Stand der Technik in der Situation von diffuser Spiegelung;
- Fig. 5: eine schematische Seitenansicht einer Anordnung zum berührungslosen Erfassen von Objekten nach dem Stand der Technik bei teilweise diffuser Spiegelung an einer Zwischenschicht zwischen Glasplatten;
- Fig. 6: eine schematische Seitenansicht einer Anordnung zum berührungslosen Erfassen von Objekten nach dem Stand der Technik bei vorgetäuschter spiegelnder Reflexion an einer überlappenden und gewellten Zwischenschicht;
- Fig. 7: eine schematische Seitenansicht eines ersten Ausführungsbeispiels einer Anordnung nach der Erfindung;
- Fig. 8: eine schematische Seitenansicht eines zweiten Ausführungsbeispiels einer erfindungsgemäßen Anordnung;
- Fig. 9: eine schematische Seitenansicht eines dritten Ausführungsbeispiels einer erfindungsgemäßen Anordnung;
- Fig. 10: eine schematische Seitenansicht eines vierten Ausführungsbeispiels einer erfindungsgemäßen Anordnung;
- Fig. 11: eine schematische Seitenansicht eines fünften Ausführungsbeispiels einer erfindungsgemäßen Anordnung; und
- Fig. 12: eine schematische Seitenansicht eines sechsten Ausführungsbeispiels einer erfindungsgemäßen Erfassungsanordnung mit Trenneinrichtung.

In den Fig. 1 bis 6 sind in schematischen Ansichten das Prinzip einer berührungslosen Objekterfassung unter Benutzung von einer Unterscheidung zwischen diffus reflektierenden Lichtanteilen und spiegelnd reflektierenden Lichtanteilen sowie die dieses Prinzip verwendenden Vorrichtungen nach dem Stand der Technik dargestellt.

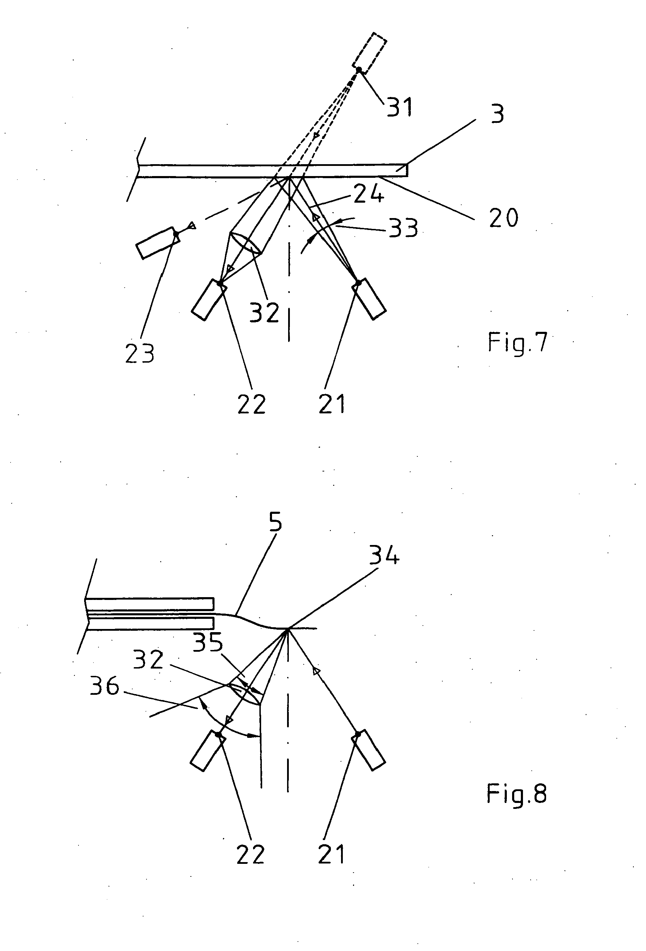

Die Fig. 7 bis 12 zeigen verschiedene Ausführungsbeispiele der erfindungsgemäßen Anordnung zum berührungslosen Erfassen und Erkennen der äußeren Erstreckung von Mehrschichtaufbauten nach der vorliegenden Erfindung und werden nachfolgend kurz beschrieben.

Die Fig. 7 zeigt ein erstes Ausführungsbeispiel einer erfindungsgemäßen Anordnung zum berührungslosen Erfassen von Objekten anhand einer Unterscheidung zwischen diffus reflektierenden und spiegelnd reflektierenden Lichtstrahlen. Von einer idealerweise punktförmigen Lichtquelle 21 wird ein Lichtstrahl schräg auf das zu erfassende Objekt, in diesem Fall ein Mehrschichtaufbau beispielsweise in Form eines Verbundglases mit mehreren Glasplatten, ausgestrahlt. Auf der Plattenoberfläche 20 der Glasplatte 3 wird durch Spiegelung die Lichtstrahlung quasi in einer virtuellen Lichtquelle 31 abgebildet - wie mit gestrichelten Linien eingezeichnet - und diese wiederum mittels einer Sammellinse 32 auf ein lichtsensibles, punktförmiges Empfangsgerät 22 abgebildet. Durch eine gezielte Anordnung und Ausrichtung der Lichtquelle einerseits und des Lichtempfangsgeräts 22 andererseits wird im Falle einer spiegelnd reflektierenden Oberfläche, wie bei einer Glasplatte 3, der reflektierte Lichtstrahl höchstgenau an das Empfangsgerät 22 umgeleitet und dort gebündelt erfasst, so dass höhere Lichtanteile als bisher von dem spiegelnd reflektierten Lichtstrahl durch das Empfangsgerät 22 empfangen werden. Dadurch trifft im Wesentlichen die gesamte Lichtmenge innerhalb des Öffnungskegels 33 auf das Empfangsgerät 22 der Vorrichtung und demzufolge eine wesentlich größere Lichtmenge als nur der direkte Strahl 24. Dadurch wird mit der Erfindung gezielt durch eine Art Fokussierung der Lichtanteil des gespiegelten Lichts, das von der Lichtquelle 21 ausgestrahlt wird und in das Empfangsgerät 22 gelangt, erhöht. Die erfindungsgemäße Anordnung ermöglicht damit eine bessere Unterscheidung zwischen spiegelnder Reflexion und diffuser Reflexion von Licht, als es bisher der Fall war. Die Erfassungssicherheit der äußeren Erstreckung bzw. der Außenkontur von Mehrschichtaufbauten, wie zum Beispiel Verbundglasaufbauten, ist hierdurch wesentlich verbessert.

Die Fig. 8 zeigt in einer schematischen Seitenansicht ein weiteres Ausführungsbeispiel einer erfindungsgemäßen Anordnung. Bei diesem Ausführungsbeispiel wird gegenüber dem vorherigen Beispiel nach der Fig. 7 auf das zweite Empfangsgerät 23 für das diffus reflektierte Licht verzichtet. Neben der Lichtquelle 21 ist nur ein einziges lichtsensibles, punktförmiges Empfangsgerät 22 vorgesehen. Zur Erzielung eines möglichst großen Verhältnisses von Nutz- zu Störsignal respektive diffus reflektiertem Signal und spiegelnd reflektiertem Signal ist es hier von Bedeutung, dass das diffus reflektierte Signal möglichst gering ist. Daher ist die Linse 32 bei diesem Ausführungsbeispiel vorteilhafterweise so angeordnet, dass ein vom Reflexionspunkt 34 an der Zwischenschicht 5 ausgehender Lichtkegel 35 durch die Linse gezielt zu einem größeren Kegel 36 aufgeweitet wird, weil dadurch im Empfangsgerät 22 die Menge des gemessenen diffus reflektierten Lichts ausgehend von der Lichtquelle 21 verringert wird. Wenn die Erhöhung des gespiegelt reflektierten Anteils von Lichtstrahlen und die gleichzeitige Verringerung des diffus reflektierten Anteils ausreichend groß sind, können auch Fälle, wie sie in der Fig. 6 dargestellt sind, sicher erkannt werden. Die Funktionsfähigkeit der Anordnung ist dadurch auch in kritischen Situationen gegenüber dem Stand der Technik deutlich erhöht.

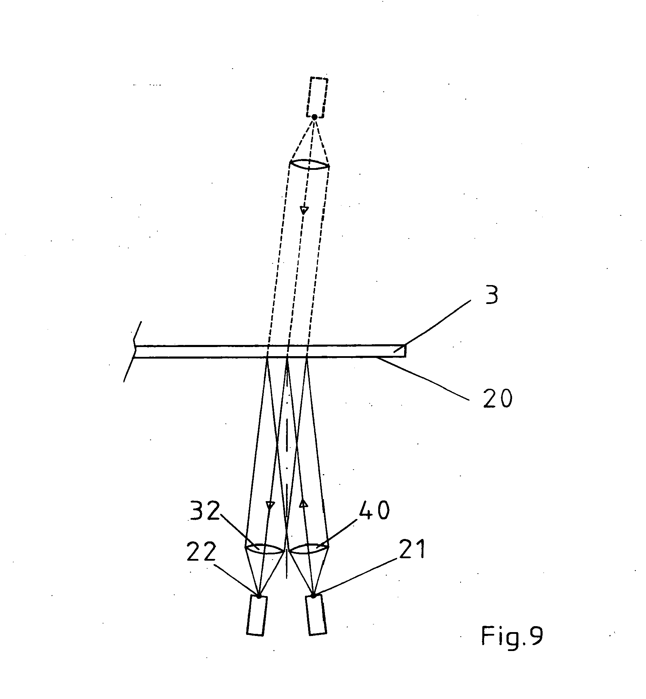

Die Fig. 9 wiederum zeigt ein weiteres Ausführungsbeispiel einer erfindungsgemäßen Anordnung zum Erfassen von reflektierenden Mehrschichtaufbauten bzw. Objekten. Bei diesem Ausführungsbeispiel ist es vorgesehen, dass auch nach der punktförmigen Lichtquelle 21 eine Sammellinse 40 eingesetzt ist und derart angeordnet ist, dass das austretende Licht zu einem zumindest näherungsweise parallelen Lichtbündel umgewandelt wird. Die Brennweiten der beteiligten Linsen 40, 32 werden so auf die jeweilige Situation und Position der Vorrichtungen in der Anordnung abgestimmt, dass weiterhin, ähnlich wie bei dem Ausführungsbeispiel nach der Fig. 7 dargestellt, die Lichtquelle 21 auf das Empfangsgerät 22 direkt und gezielt abgebildet wird unter Berücksichtigung der spiegelnden Reflexion. Dadurch ist es möglich, die Entfernung des Empfangsgeräts 22 zur reflektierenden Oberfläche 20 des zu erfassenden Objekts, in diesem Fall beispielhaft eine Glasplatte 3, ohne wesentlich Verluste für den spiegelnd reflektierten Anteil von Licht zu vergrößern. Ein diffus reflektierter Anteil von Lichtstrahlen nimmt aber umgekehrt proportional zum Quadrat des Abstandes ab, so dass das Verhältnis der beiden Signale bzw. der Abstand der Signale zueinander verbessert wird. Dies erhöht die Aussagekraft und Erfassungssicherheit der Anordnung.

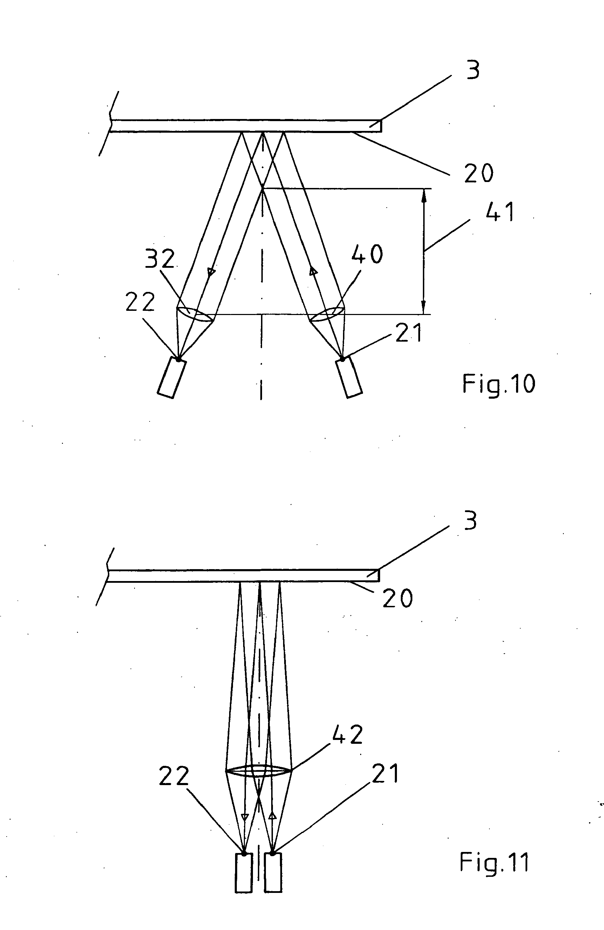

In der Fig. 10 ist wiederum ein weiteres Ausführungsbeispiel einer erfindungsgemäßen Anordnung in einer schematischen Seitenansicht gezeigt, wobei es sich hierbei um eine Variante des Ausführungsbeispiels nach der Fig. 9 handelt. Bei dem Ausführungsbeispiel nach der Fig. 10 sind die Brennweiten der Linsen und Positionierungen bzw. Ausrichtungen der Lichtquelle 21 und des Empfangsgeräts 22 derart gewählt, dass die beiden Strahlungskegel von der Lichtquelle 21 und in Richtung zu dem Empfangsgerät 22 sich erst ab einer gewissen Mindestentfernung 41 überlappen. Dadurch wird ein Empfangssignal in dem Empfangsgerät 22 erst ab einem gewissen Mindestabstand der Anordnung von dem Messobjekt möglich, wo der Anteil des diffus reflektierten Lichts und damit des entsprechenden Signals bereits deutlich zurückgegangen ist. Ein hohes Empfangssignal im Empfangsgerät 22 aus diffuser Reflexion von Lichtstrahlen wird somit ausgeschlossen, was Fehler in der Erfassung der äußeren Erstreckung der Glasplatten vermeidet. Somit werden Fehler in der Erfassung der äußeren Erstreckung der Glasplatten vermieden, die sonst bei naheliegenden Objekten mit diffuser Reflexion auftreten könnten.

In der Fig. 11 ist eine weitere Variante eines erfindungsgemäßen Ausführungsbeispiels einer Anordnung in Anlehnung an das Ausführungsbeispiel nach der Fig. 9 dargestellt. Bei diesem Ausführungsbeispiel wird eine einzige Sammellinse 42 doppelt verwendet, indem der Strahlengang von der Lichtquelle 21 zuerst durch die Linse 42, sodann auf die reflektierende Oberfläche 20 und anschließend wieder durch die Linse 42 in das lichtsensible, punktförmige Empfangsgerät geleitet wird. Die einzelnen Vorrichtungen der erfindungsgemäßen Anordnung sind entsprechend angeordnet und ausgerichtet, so dass diese doppelte Nutzung einer einzigen Sammellinse 42 ermöglicht wird. Dies bietet ähnliche Vorteile wie bei dem vorherigen Ausführungsbeispiel nach der Fig. 9, jedoch wird nur eine einzige Linse 42 benötigt, was neben dem geringeren apparativen Aufwand und den geringeren Herstellungskosten für die Vorrichtung auch insgesamt eine deutlich kompaktere Bauweise der Anordnung bedeutet.

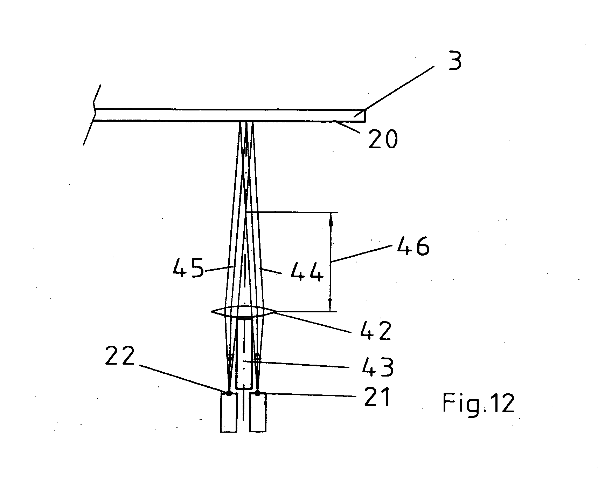

Ein sechstes Ausführungsbeispiel einer erfindungsgemäßen Anordnung zur Erfassung von Mehrschichtobjekten ist schließlich in einer schematischen Seitenansicht in der Fig. 12 gezeigt. Bei dieser Ausführungsform werden gezielt durch eine geeignete mechanische Trenneinrichtung 43 die jeweiligen Lichtbündel 44 der Lichtquelle 21 und das Lichtbündel 45 in Richtung zu dem Empfangsgerät 22 so voneinander getrennt, dass erst ab einer gewissen Mindestentfernung 46 der Anordnung von dem Messobjekt 3 ein Empfangssignal im Empfangsgerät 22 ermöglicht wird. Daraus ergibt sich eine Kombination der oben beschriebenen Vorteile der Ausführungsbeispiele nach der Fig. 9 und der Fig. 10. Da die beiden Lichtkegel ungefähr eine gleiche Richtung haben, ist die Anordnung einerseits unempfindlich gegenüber Abstandsänderungen der Geräte der Vorrichtung vom Messobjekt. Trotzdem werden Störeinflüsse, die ein zu nahes, diffus reflektierendes Messobjekt 3 immer noch haben kann, effektiv hierdurch ausgeschaltet. Als mechanische Trenneinrichtung 43 können alle dem Fachmann hierfür bekannten Mittel dienen, insbesondere bewegliche oder feststehende Blenden oder Bleche.

Die Erfindung ist nicht auf die zuvor dargestellten Ausführungsbeispiele beschränkt und umfasst alle technisch möglichen Ausführungsvarianten, welche in den Umfang der beigefügten Ansprüche fallen. Insbesondere kann die Anzahl von verwendeten Linsen oder Empfangsgeräten variieren. Auch können statt einer einzigen punktförmigen Lichtquelle mehrere Lichtquellen in der erfindungsgemäßen Anordnung eingesetzt werden, wobei jeweils eine Lichtquelle einem Empfangsgerät zugeordnet ist. Die Erfindung ist ebenfalls nicht auf die Anwendung auf Verbundglas als Mehrschichtaufbau bzw. Messobjekt beschränkt und kann für andere Anwendungszwecke eingesetzt werden, solange sich bei den Objekten unterschiedlich reflektierende Oberflächenbereiche finden.

## Patentansprüche

1. Anordnung zum berührungslosen Erkennen der Ausdehnung eines Objekts mit unterschiedlich reflektierenden Oberflächenbereichen durch Unterscheidung von einerseits spiegelnder und andererseits diffuser Reflexion von Lichtstrahlen, insbesondere zur Erfassung der äußeren Erstreckung einer äußeren Schicht eines Mehrschichtaufbaus (1) aus verschiedenen Materialien, mit einer punktförmigen Lichtquelle (21) und mindestens einem punktförmigen, lichtsensiblen Empfangsgerät (22), **dadurch gekennzeichnet, dass** mindestens eine optische Linse (32) oder Linsenanordnung vorgesehen ist, welche im Verhältnis zum Mehrschichtaufbau (1) und zur Lichtquelle (21) derart angeordnet ist, dass eine Lichtstrahlung der punktförmigen Lichtquelle (21) mittels der mindestens einen optischen Linse (32) unter Verwendung der spiegelnden Reflexion von dem zu erfassenden Mehrschichtaufbau (1) auf das mindestens eine punktförmige Empfangsgerät (22) abgebildet wird.

2. Anordnung nach Anspruch 1, **dadurch gekennzeichnet, dass** eine Sammellinse (32) zwischen der Oberfläche des zu erfassenden Mehrschichtaufbaus (1) und dem Empfangsgerät (22) angeordnet ist.

3. Anordnung nach Anspruch 1 oder 2, **dadurch gekennzeichnet, dass** eine zusätzliche Sammellinse (40, 42) derart vorgesehen ist, dass ein von der Lichtquelle (21) ausgestrahlter Lichtkegel zwischen der Lichtquelle (21) und der Oberfläche des Mehrschichtaufbaus (1) mittels der zusätzlichen Sammellinse (40, 42) zu einem mindestens näherungsweise parallelen Lichtbündel (44) umgeformt wird.

4. Anordnung nach einem der vorangegangenen Ansprüche, **dadurch gekennzeichnet, dass** die Lichtquelle (21) und/oder das Empfangsgerät (22) derart angeordnet oder ausgebildet sind, dass sich ein von der Lichtquelle (21) ausgestrahltes Lichtbündel und ein von dem Empfangsgerät (22) empfangenes Lichtbündel erst ab einer gewissen Mindestentfernung von dem Mehrschichtaufbau (1) überlappen.

5. Anordnung nach einem der vorangegangenen Ansprüche, **dadurch gekennzeichnet, dass** die mindestens eine Linse (42) für die Umformung des von der Lichtquelle (21) ausgestrahlten Lichtkegels zu einem parallelen Lichtbündel mit der Linse (42) vor dem mindestens einen Empfangsgerät (22) identisch ist.

6. Anordnung nach einem der vorangegangenen Ansprüche, **dadurch gekennzeichnet, dass** ein mechanischer Trennsteg (43) vorgesehen ist, welcher ein Empfangssignal für eine spiegelnde Reflexion vom zu erfassenden Mehrschichtaufbau (1) in dem Empfangsgerät (22) zur Bestimmung einer Außenkante des Objekts (1) erst ab einer gewissen Mindestentfernung des mindestens einen Empfangsgeräts (21, 22) vom Mehrschichtaufbau (1) ermöglicht.

7. Anordnung nach Anspruch 6, **dadurch gekennzeichnet, dass** der mechanische Trennsteg (43) zwischen der Lichtquelle (21) und dem Empfangsgerät (22) einerseits und der Linse (42) andererseits angeordnet ist.
